# EUROPÄISCHE PATENTSCHRIFT

(11) **EP 3 906 599 B1**
(45) Veröffentlichungstag und Bekanntmachung des Hinweises auf die Patenterteilung: **11.09.2024**
(21) Anmeldenummer: 20710888.7
(22) Anmeldetag: 09.03.2020
(51) Int. Cl.: H02G 3/04, H02G 3/32

(54) **KABELRINNE MIT EINEM SCHUTZLEITERHALTER**
CABLE TRAY HAVING AN EARTH WIRE HOLDER
CHEMIN DE CÂBLES POURVU D'UN PORTE-CONDUCTEUR DE PROTECTION

(30) Priorität: 13.03.2019 DE 202019101428 U
(43) Veröffentlichungstag der Anmeldung: 10.11.2021
(73) Patentinhaber: OBO Bettermann Produktion Deutschland GmbH & Co.KG, 58710 Menden (DE)
(72) Erfinder: GUTT, Wolfgang, 58710 Menden (DE)
(74) Vertreter: Haverkamp Patentanwälte PartG mbB
(86) Internationale Anmeldenummer: PCT/EP2020/056228
(87) Internationale Veröffentlichungsnummer: WO 2020/182738

(56) Entgegenhaltungen:
- EP-A1- 2 835 869
- EP-A1- 2 835 869
- DE-A1- 10 332 214
- DE-A1- 10 332 214
- US-A- 4 029 384
- US-A- 4 029 384
- US-A- 4 806 108
- US-A- 4 806 108
- US-A1- 2018 045 335
- US-A1- 2018 045 335
- SCHNEIDER: "Schneider Electric", 15 October 2018 (2018-10-15), pages 1 - 340, XP055697595, Retrieved from the Internet <URL:https://www.merten.de/fileadmin/import/files/merten/katalog/Schneider_Electric_Katalog_2019_Digital.pdf> [retrieved on 20200520]
- SCHNEIDER: "Schneider Electric", 15 October 2018 (2018-10-15), pages 1 - 340, XP055697595, Retrieved from the Internet <URL:https://www.merten.de/fileadmin/import/files/merten/katalog/Schneider_Electric_Katalog_2019_Digital.pdf> [retrieved on 20200520]

## Beschreibung

Die Erfindung betrifft eine Kabelrinne mit zwei mit Abstand zueinander angeordneten Seitenholmen und zumindest einem Schutzleiterhalter mit den Merkmalen des Anspruchs 1.

Kabelrinnen dienen zum Führen von elektrischen Leitungen und anderweitiger Kabel. Mit einer Vielzahl derartiger Kabelrinnen werden Kabeltragsysteme (auch Kabeltrassen genannt) gebildet, um vor allem flexible Leitungen in Gebäuden zu führen. Die Kabelrinnen sind wand- oder deckenseitig mit entsprechenden Haltern befestigt. Derartige Kabelrinnen werden typischerweise aus Stahlblech hergestellt. In vielen Fällen ist das Stahlblech zum Korrosionsschutz verzinkt. Derartige Kabelkanäle können mit einem Deckel verschlossen sein. Bei aus Stahlblech hergestellten Kabelrinnen können diese geschlossen oder mit einer Lochrasterung versehen ausgeführt sein. Kabelkanäle können auch als sogenannte Gitterrinnen ausgeführt sein. Es gibt auch andere Auslegungen, derartige Leitungsführungskanäle bereitzustellen. Im Rahmen dieser Ausführungen sind sämtliche zum Aufbau von Kabeltragsystemen eingesetzten Rinnenteile im Rahmen dieser Ausführungen als Kabelrinnen angesprochen.

Kabelrinnen weisen zwei mit Abstand zueinander angeordnete Seitenholme auf. Die Seitenholme sind in vielen Fällen durch einen Boden miteinander verbunden. Bei einer aus Stahlblech hergestellten Kabelrinne ist diese typischerweise aus einer einzigen Platine geformt. Bei anderen Ausgestaltungen sind die Seitenholme durch Sprossen miteinander verbunden. Die aus Metall hergestellten Kabelrinnen übernehmen in vielen Fällen neben ihrer Tragfunktion auch eine Potentialausgleichsfunktion. Kabeltragsysteme, die aus einer Vielzahl derartiger Kabelrinnen zusammengesetzt sind, sind, wenn das Kabeltragsystem eine solche Funktionalität aufweisen soll, elektrisch leitend miteinander verbunden. Es gibt Anwendungsfälle, bei denen gewünscht wird, dass die Kabelrinne bzw. das aus mehreren oder einer Vielzahl derartiger Kabelrinnen aufgebaute Kabeltragsystem ebenfalls eine Schutzleiterfunktionalität übernehmen kann.

Damit der Kabelkanal eine Schutzleiterfunktion übernehmen kann, ist die Etablierung eines zusätzlichen Schutzleiters erforderlich, da die elektrische Leitfähigkeit der typischerweise aus Stahlblech hergestellten Kabelrinnen nicht den an einen Schutzleiter gestellten Anforderungen genügt. Dieses gilt selbstverständlich umso mehr, wenn die Kabelrinnen Kunststoffteile sind. Als Schutzleiter wird zu diesem Zweck an einem Kabeltragsystem, welches eine Schutzleiterfunktionalität aufweisen soll, ein als Kupferseil hergestellter Schutzleiter montiert. Für die Montage des Schutzleiters an einer solchen Kabelrinne werden Schutzleiterhalter verwendet. Bei diesen handelt es sich um als Anschlussklemmen ausgeführte Messingteile von üblicherweise quaderförmiger Geometrie. Zum Anschluss einer solchen Anschlussklemme an den Seitenholm einer Kabelrinne ist es zunächst erforderlich, den Seitenholm an entsprechender Stelle zu durchbohren, die Anschlussklemme entsprechend anzuordnen und diese sodann mit einer Schraube gegenüber dem Seitenholm zu verspannen. Das Bohren der Montageöffnung in den Seitenholm ist erforderlich, da Kabelkanäle mit einer Schutzleiterfunktion in den meisten Fällen als geschlossene Kabelrinnen ausgeführt sind. Eine solche als Schutzleiterhalter ausgeführte Anschlussklemme verfügt über eine Schutzleiteraufnahme zum Einlegen des Schutzleiters. Ein der Anschlussklemme zugeordnetes Klemmmittel dient zum Verklemmen des Schutzleiters innerhalb der Schutzleiteraufnahme. Der Schutzleiter selbst trägt keine Isolierung, sodass auf diese Weise zugleich die elektrische Kontaktierung zwischen dem Schutzleiter und der Kabelrinne hergestellt ist, wenn es sich bei der Kabelrinne um eine solche aus Metall handelt. Dieses dürfte für die in Rede stehenden Anwendungen die Regel sein.

Montiert werden die Anschlussklemmen in einem regelmäßigen Abstand von etwa 1 Meter an der Kabelrinne bzw. dem Kabeltragsystem. In Bogenstücken oder bei Eckausbildungen müssen die Anschlussklemmen in einem deutlich geringeren Abstand zueinander angeordnet sein.

Die Anschlussklemmen verfügen über Anschlussmittel, damit Schutzleiter von Maschinen daran angeschlossen werden können. Insofern stellt ein solcher an eine Kabelrinne bzw. an ein aus einer Vielzahl von Kabelrinnen zusammengesetztes Kabeltragsystem angeschlossene Schutzleiter einen speziellen, von dem Kabeltragsystem getragenen Leiter dar. Auch wenn mit einem derartigen Schutzleiter ausgerüstete Kabeltragsysteme den an seine Schutzleiterfunktion gestellten Anforderungen genügen, wäre es dennoch wünschenswert, wenn eine Montage eines solchen Schutzleiters vereinfacht wäre. Die Montage ist infolge des in aller Regel notwendigen Einbringens einer Montagebohrung und der Montage der Anschlussklemmen aufwendig. Insbesondere ist beim Bohren darauf zu achten, dass innerhalb der Kabelrinne keine Bohrspäne zurückbleiben, die die Isolierung darin geführter elektrischer Leitungen beschädigen könnten. Dieses mag zwar bei einer Montage des Schutzleiters bei noch nicht bestückten Kabelrinnen möglich sein. Sind in dem Kabeltragsystem jedoch bereits Leitungen verlegt und wird der Schutzleiter erst nachträglich montiert, muss Sorge dafür getragen werden, dass möglichst keine Bohrspäne auf bzw. zwischen die bereits in der Kabelrinne befindlichen Leitungen gelangen.

Aus US 4 029 384 A ist ein Schutzleiterhalter bekannt. Dieser ist als Federklammer mit jeweils einer durch zwei Montageschenkel eingefassten Aufnahme an einem Montagegrund befestigbar. Dieser Schutzleiterhalter verfügt über eine durch zwei Halteschenkel eingefasste hinterschnittene Schutzleiteraufnahme. Dabei ist vorgesehen, dass der Abstand der Halteschenkel voneinander in ihrem die Schutzleiteraufnahme einfassenden Abschnitt geringer ist als der Durchmesser des darin einzubringenden Schutzleiters.

Ein weiterer Schutzleiterhalter ist aus EP 2 835 869 A1 bekannt. Auch dieser vorbekannte Schutzleiterhalter verfügt über eine Klemmaufnahme zum Anschließen des Schutzleiterhalters an einen Befestigungsgrund. Eine zweite durch zwei Halteschenkel ausgebildete Aufnahme dient zum Einsetzen eines Schutzleiters, der unter Vorspannung stehend darin gehalten ist. Einen zu den vorstehend beschriebenen Schutzleiterhaltern ähnlicher Schutzleiterhalter ist auch aus Schneider: "Schneider Electric", 15. Oktober 2018 (2018-10-15), Seiten 1-340, XP055697595, Gefunden im Internet: URL:https://www.merten.de/fileadmin/import/files/merten/katalog/Schneide r_Electric_Katalog_2019_Digital.pdf [gefunden am 2020-05-20] bekannt.

Aus der DE 103 32 214 A1 ist eine Profilschiene für Leitungen mit einem Schutzleiter bekannt.

Ausgehend von diesem diskutierten Stand der Technik liegt der Erfindung daher die Aufgabe zugrunde, eine Kabelrinne dergestalt weiterzubilden, dass eine Ausrüstung derselben mit einem Schutzleiter vereinfacht ist.

Gelöst wird diese Aufgabe durch eine eingangs genannte, gattungsgemäße Kabelrinne mit den Merkmalen des Anspruchs 1.

Bei dieser Kabelrinne ist der zumindest eine Schutzleiterhalter als Federklammer ausgeführt. Die Schutzleiterhalter verfügen über eine Seitenholmaufnahme, die den oberen Abschluss desjenigen Seitenholms umgreift, auf welchen die Federklammer montiert ist. Eine Montage der Federklammer, die vorzugsweise aus einem Federstahl hergestellt ist, ist ohne Weiteres werkzeuglos möglich. Die Seitenholmaufnahme einer solchen Federklammer als Schutzleiterhalter ist durch zwei Montageschenkel eingefasst, die bei montierter Federklammer unter Vorspannung stehend an dem Seitenholm anliegen. Die Montageschenkel sind typischerweise durch einen Steg miteinander verbunden, durch den zugleich die Montagetiefe der Federklammer gegenüber der Höhe des Seitenholms begrenzt ist. Bei an einem Seitenholm montierter Federklammer liegt gemäß einer bevorzugten Ausgestaltung der Steg an dem oberen Abschluss des Seitenholms an. Auf diese Weise ist eine elektrische Kontaktierung zwischen der Federklammer und dem Seitenholm und damit der Kabelrinne, wenn aus Metall hergestellt, was die Regel sein dürfte, zumindest über die unter Vorspannung an dem Seitenholm anliegenden Montageschenkel bereitgestellt. Bei Vorsehen eines die Montageschenkel einer solchen Federklammer verbindenden Steges der vorgenannten Art erfolgt auch durch die kontaktierende Anlage des Steges an dem oberen Abschluss des Seitenholms eine elektrische Kontaktierung. Die Vorspannung, mit der die Montageschenkel bei montierter Federklammer auf den oberen Abschluss des Seitenholms wirken, gewährleistet nicht nur die für eine elektrische Kontaktierung erforderliche Flächenpressung, sondern gewährleistet zugleich einen sicheren Halt der Federklammer an dem oberen Abschluss des Seitenholms. Die Federklammer selbst ist bezüglich der Auslegung der Montageschenkel und somit ihrer Seitenholmaufnahme an den oberen Abschluss der Kabelrinne angepasst. Weist eine solche Kabelrinne ein geformtes Auge auf, ist die Seitenholmaufnahme mit einer entsprechenden Weite ausgeführt. Um die notwendige Vorspannung zu erzeugen, ist der kleinste Abstand der beiden Montageschenkel voneinander, wenn nicht auf den oberen Abschluss eines Seitenholms aufgesetzt, kleiner als die Breite des komplementären Seitenholmabschnittes, also etwa des geformten Auges, an denen die Montageschenkel, wenn auf den oberen Abschluss des Seitenholms montiert, anliegen.

Neben der Seitenholmaufnahme verfügt eine solche als Schutzleiterhalter ausgeführte Federklammer über zumindest eine Schutzleiteraufnahme. Diese ist durch zwei Halteschenkelabschnitte eingefasst. Die Schutzleiteraufnahme dient zum Halten eines Schutzleiters, beispielsweise eines als Schutzleiter vorgesehenen Kupferseils. Die Halteschenkel sind ebenso wie die Montageschenkel der Federklammer, bedingt durch das Material der Federklammer federelastisch gegeneinander verstellbar. Ist in die Schutzleiteraufnahme kein Schutzleiter eingesetzt, ist der Abstand der Halteschenkel im Bereich der Schutzleiteraufnahme voneinander geringer als der Durchmesser des darin eingebrachten bzw. darin einzubringenden Schutzleiters. Dies trägt Sorge dafür, dass die Halteschenkel mit Vorspannung auf die Mantelfläche des Schutzleiters wirken. Diese Vorspannung dient nicht nur zum sicheren Halten des Schutzleiters, sondern ebenfalls zum Bereitstellen einer elektrischen Kontaktierung, wenn erforderlich.

Gemäß einer zweckmäßigen Ausgestaltung einer solchen Federklammer ist die Schutzleiteraufnahme an die Seitenholmaufnahme angeformt. Dabei ist vorgesehen, dass sich der eine Montageschenkel der Seitenholmaufnahme in einen Halteschenkel der Schutzleiteraufnahme fortsetzt. Bei einer solchen Ausgestaltung befindet sich somit die Schutzleiteraufnahme in einem gewissen Abstand von dem oberen Abschluss des Seitenholms. Dies ist günstig für ein unter Umständen gewünschtes Verschließen der Kabelrinne mit einem Deckel. Bei einer solchen Ausgestaltung besteht die Möglichkeit, die Federklammer so zu formen, dass, wenn diese auf den oberen Abschluss eines Seitenholms montiert ist, sich diese mit ihrem dem Seitenholm näheren Halteschenkel an dem Seitenholm abgestützt ist, so dass dieser unter einer gewissen Vorspannung an dem Seitenholm anliegt. Dadurch ist nicht nur eine weitere elektrische Kontaktierungsstelle bereitgestellt, sondern die Federklammer ist dann durch diese zusätzliche Abstützung besser an dem Seitenholm fixiert.

Zum erleichterten Einführen eines Schutzleiters in die Schutzleiteraufnahme verfügen die Halteschenkel über jeweils einen Stellschenkelabschnitt. Dabei ist vorgesehen, dass sich der Abstand der beiden Stellschenkelabschnitte in Richtung zum Eingang der Schutzleiteraufnahme reduziert. Somit dienen diese geneigten Stellschenkelabschnitte als Stellflächen zum Aufweiten des Einganges der hinterschnittenen Schutzleiteraufnahme bei dem Einsetzen eines Schutzleiters.

Um die gewünscht elastische Bewegbarkeit der beiden Halteschenkel zueinander zu bewirken, sind die Halteschenkel beispielsweise mit einem bogenförmig ausgeführten Klemmfederabschnitt miteinander verbunden.

In vielen Fällen wird eine solche Kabelrinne, insbesondere wenn aus Metall gefertigt, an den oberen Abschlüssen ihrer Seitenholme ein Auge aufweisen. Die Seitenholmaufnahme ist typischerweise ebenso wie die Schutzleiteraufnahme hinterschnitten. Soll die Federklammer an einen ein Auge aufweisenden Seitenholm angeschlossen werden, ist vorzugsweise der an der Außenseite des Auges zur Anlage gelangende Montageschenkel stärker gegenüber der Ebene des Seitenholms (der Vertikalen) geneigt als der andere Montageschenkel. Hierdurch wird ein gewisses Untergreifen des Auges mit dem Montageschenkel bewirkt, wenn die Seitenholmaufnahme eine hinreichende Tiefe aufweist, um das Auge insgesamt aufnehmen zu können.

Bei dieser Kabelrinne ist die Funktionalität des Haltens des Schutzleiters getrennt von der Funktionalität des Anschließens von weiteren Schutzleitern an der kabelrinnenseitig montierten Schutzleiter. Daher kann bei dieser Kabelrinne eine Anschlussklemme zum Herstellen einer Verbindung zwischen dem in der Kabelrinne montierten Schutzleiter und einem daran anzuschließenden Schutzleiter dort montiert werden, wo auch tatsächlich ein solcher Anschluss erforderlich ist. Zudem kann die Anschlussklemme an beliebiger Stelle und insbesondere auch unabhängig von den Federklammern an dem an einem Seitenholm der Kabelrinne gehaltenen Schutzleiter positioniert werden

Eine solche Anschlussklemme verfügt gemäß einer Ausgestaltung über eine seitlich offene Schutzleiteraufnahme. Diese Öffnung ist in Richtung zu dem benachbarten Seitenholm offen. Die Anschlussklemme verfügt zudem über ein Klemmmittel, mit dem der in die Schutzleiteraufnahme eingelegte Schutzleiter verklemmt wird. Dadurch wird nicht nur eine dauerhaft wirksame elektrische Kontaktierung hergestellt, sondern zugleich ist die Anschlussklemme in Längserstreckung der Kabelrinne bzw. des darin geführten Schutzleiters fixiert.

In der Ausführung einer solchen Federklammer ist der Teil der Federklammern, der die Schutzleiteraufnahme bildet, gegabelt ausgeführt. Damit verfügt eine solche Federklammer über zwei voneinander in Längserstreckung der Kabelrinne bzw. des Schutzleiters voneinander beabstandete Schutzleiteraufnahmen. Vorteilhaft bei einer solchen Ausführung ist, dass aufgrund der geringen Breite der die Schutzleiteraufnahmen bildenden Gabelfortsätze der Federklammer jeweils nur eine geringere Öffnungskraft aufgewendet werden muss, um einen Schutzleiter in die jeweilige Schutzleiteraufnahme einsetzen zu können. Durch diese beiden Schutzleiteraufnahmen ist zudem eine sichere Verklemmung eines in die Schutzleiteraufnahmen eingesetzten Schutzleiter verbessert. In einer bevorzugten Ausgestaltung einer solchen Federklammer ist die Breite des Zwischenraumes, mithin der Abstand der beiden Gabelfortsätze voneinander um ein notwendiges Bewegungsspiel größer als die diesbezügliche Breite einer Anschlussklemme. Bei einer solchen Ausgestaltung kann eine Anschlussklemme zwischen die Gabelfortsätze einer solchen Federklammer montiert werden. Durch die Fixierung des Schutzleiters in den beiden zu der Anschlussklemme unmittelbar benachbarten Schutzleiteraufnahmen ist bei einer Montage der Anschlussklemme zwischen den Gabelfortsätzen diese zudem in Querrichtung zur Ebene des Seitenholms fixiert. Eine solche Ausgestaltung der Federklammer und die Montage einer Anschlussklemme zwischen den Gabelfortsätzen kann genutzt werden, um mit der Anschlussklemme eine Federklammer an dem oberen Abschluss eines ein Auge aufweisenden Seitenholms zu verriegeln. Dieses ist möglich, wenn die Anschlussklemme die zum unterseitigen Abschluss der Kabelrinne weisende Stirnfläche eines solchen Auges untergreift. Eine Demontage wäre bei einer solchen Festlegung der Federklammer an dem oberen Abschluss eines Seitenholms nur möglich, wenn die Montageschenkel entsprechend weit gegeneinander aufgebogen werden. Ein einfaches Abziehen der Federklammer von dem oberen Abschluss eines solchermaßen konzipierten Seitenholms ist durch einen solchen, durch die Anschlussklemme bereitgestellten Riegelkörper wirksam verhindert.

Als Klemmmittel kann eine solche Anschlussklemme beispielsweise eine als Madenschraube ausgeführte Klemmschraube aufweisen. Auch andere Klemmmittel sind möglich.

Die vorstehende Beschreibung der mit einem Schutzleiter ausgerüsteten Kabelrinne sowie der als Federklammern ausgeführten Schutzleiterhalter lässt deutlich werden, dass eine Montage eines Schutzleiters an einer Kabelrinne oder einem Kabeltragsystem sehr viel einfacher, insbesondere auch werkzeuglos möglich ist. Dabei können die Federklammern, da diese auf dem oberen Abschluss eines Seitenholms montiert werden, ohne auf Durchbrechungen im Seitenholm Rücksicht zu nehmen, an beliebiger Stelle montiert und auch ohne Weiteres demontiert werden. Maßgeblich ist auch, dass bei der Montage keine Bohrspäne anfallen, schlichtweg deswegen nicht, da eine Seitenholmöffnung zum Durchführen eines Schraubbefestigers nicht erforderlich ist.

Bei diesem Konzept kann je nach Auslegung und Orientierung der Federklammern der Schutzleiter innerhalb einer Kabelrinne oder auch außerhalb derselben geführt sein. Es versteht sich, dass Schutzleiter innen- und/oder auch außenseitig bezüglich eines Seitenholms montiert sein können. Hierfür können Federklammern verwendet werden, die nur an einer Seite eine Schutzleiteraufnahme oder im Falle einer gegabelten Schutzleiteraufnahme zwei voneinander beanstandete Schutzleiteraufnahmen aufweisen. Ist von vornherein eine Schutzleitermontage sowohl innenseitig bezüglich des Seitenholms als auch außenseitig vorgesehen, können die Federklammern auch in Verlängerung der beiden Montageschenkel jeweils eine oder im Falle einer gegabelten Ausführung auch zwei Schutzleiteraufnahmen aufweisen.

Nachstehend ist die Erfindung unter Bezugnahme auf die beigefügten Figuren anhand von Ausführungsbeispielen beschrieben. Es zeigen:
- **Fig. 1:**: eine perspektivische Ansicht eines Abschnittes eines Kabelkanals mit einem daran montierten Schutzleiter,
- **Fig. 2:**: eine perspektivische Darstellung einer als Schutzleiterhalter dienenden Federklammer,
- **Fig. 3:**: eine Seitenansicht der Federklammer der Figur 3,
- **Fig. 4:**: eine perspektivische Ansicht einer Anschlussklemme zum Bereitstellen eines Schutzleiterabzweiges,
- **Fig. 5:**: eine Schnittdarstellung durch den linken Teil der Kabelrinne der Figur 1,
- **Fig. 6:**: eine perspektivische Ansicht der Rinne der Figur 1 auf die Außenseite des in Figur 1 linken Seitenholms und

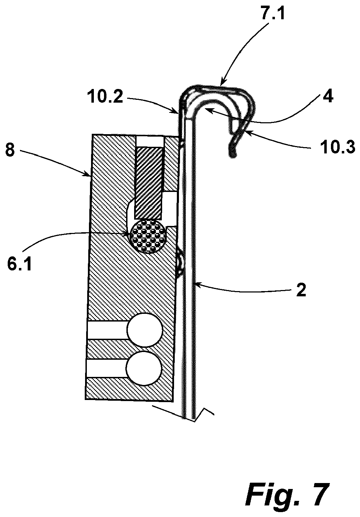

- **Fig. 7:**: eine Schnittdarstellung durch die außenseitige Schutzleiterhalterung.

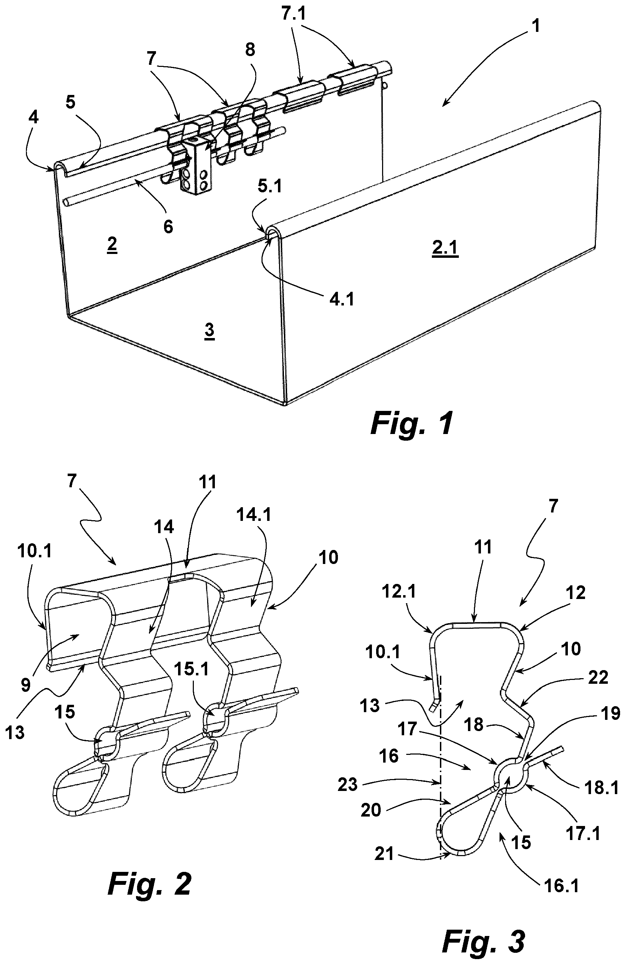

Eine Kabelrinne 1 ist in Figur 1 nur in einem kurzen Abschnitt gezeigt. Die Kabelrinne 1 verfügt über zwei Seitenholme 2, 2.1, die durch einen Boden 3 miteinander verbunden sind. Die Kabelrinne 1 ist oberseitig offen, kann jedoch, wenn gewünscht, durch einen Deckel verschlossen werden, um auf diese Weise einen Kabeltunnel auszubilden. Die Seitenholme 2, 2.1 tragen zur Ausbildung ihres oberen Abschlusses jeweils ein Auge 4, 4.1. Bei dem dargestellten Ausführungsbeispiel ist das Auge 4, 4.1 jedes Seitenholms 2, 2.1 in Richtung zu dem jeweiligen anderen Seitenholm 2.1 bzw. 2 geformt. Damit weisen die Außenseiten 5, 5.1 der Augen 4, 4.1 zueinander. Die Kabelrinne 1 ist ein verzinktes Stahlblechbauteil. Der Boden 3 und die Seitenholme 2, 2.1 sind bei dem dargestellten Ausführungsbeispiel ungelocht.

Die Kabelrinne 1 des dargestellten Ausführungsbeispiels dient nicht nur zum Bereitstellen eines Potentialausgleiches, sondern verfügt ebenfalls über eine Schutzleiterfunktionalität. Zu diesem Zweck ist an der Kabelrinne 1 ein Schutzleiter 6 montiert. Der Schutzleiter 6 befindet sich innenseitig bezüglich des von der Kabelrinne 1 gebildeten Volumens benachbart zu dem Seitenholm 2. Der Schutzleiter 6 ist durch mehrere mit Abstand zueinander angeordnete Federklammern 7 gehalten. In Figur 1 sind zwei Federklammern 7 nebeneinander angeordnet. Dieses ist der Erläuterung geschuldet. Tatsächlich wird man die Federklammern 7 mit einem gewissen Abstand voneinander, etwa 90 bis 110 cm anordnen. Auch andere Abstände sind selbstverständlich möglich. Zum Bereitstellen eines Schutzleiterabzweiges ist an den Schutzleiter 6 eine Anschlussklemme 8 angeschlossen.

Die Federklammer 7 und die Anschlussklemme 8 sind in den nachfolgenden Figuren 2 bis 4 näher beschrieben. Die Federklammer 7 ist ein aus einem Federstahl hergestelltes Stanzbiegeteil. Die Federklammer 7 verfügt über eine Seitenholmaufnahme 9, und zwar zur Aufnahme des durch das Auge 4 gebildeten oberen Abschluss des Seitenholms 2. Die Seitenholmaufnahme 9 der Federklammer 7 ist durch zwei Montageschenkel 10, 10.1 seitlich eingefasst. Die beiden Montageschenkel 10, 10.1 sind durch einen Steg 11 miteinander verbunden, und zwar bei dem dargestellten Ausführungsbeispiel unter Zwischenschaltung jeweils eines Bogenstückes 12, 12.1. Die Seitenholmaufnahme 9 ist, wie vor allem aus der Figur 3 erkennbar, hinterschnitten. Der Eingang 13 zu der Seitenholmaufnahme 9 ist durch die engste Beabstandung der beiden Montageschenkel 10, 10.1 gebildet. Die Montageschenkel 10, 10.1 sind zueinander geneigt, wobei sich deren Abstand aus Richtung der Seitenholmaufnahme 9 zu dem Eingang 13 hin verjüngt. Dabei ist vorgesehen, dass der Montageschenkel 10 stärker geneigt ist als der Montageschenkel 10.1, und zwar gegenüber einer vertikalen Ebene, beispielsweise bereitgestellt durch den Seitenholm 2.

Der Montageschenkel 10 ist bei dem dargestellten Ausführungsbeispiel gegabelt (s. Figur 2). Die beiden Gabelfortsätze 14, 14.1 sind voneinander in Längserstreckung des Seitenholms 2 beabstandet. Jeder Gabelfortsatz 14, 14.1 verfügt über eine Schutzleiteraufnahme 15, 15.1. Die beiden Gabelfortsätze 14, 14.1 sind identisch aufgebaut. Die nachfolgende Beschreibung des Gabelfortsatzes 14 gilt somit gleichermaßen für den Gabelfortsatz 14.1. Die Schutzleiteraufnahme 15 wird durch zwei Abschnitte jeweils eines Halteschenkels 16, 16.1 eingefasst. Die bei dem in den Figuren gezeigten Ausführungsbeispiel durch ein Kreissegment gebildeten Abschnitte der Halteschenkel 16, 16.1 sind in den Figuren mit dem Bezugszeichen 17, 17.1 kenntlich gemacht. An die die Schutzleiteraufnahme 15 einfassenden Abschnitte 17, 17.1 der Halteschenkel 16, 16.1 sind zwei Stellschenkelabschnitte 18, 18.1 angeformt. Die Stellschenkelabschnitte 18, 18.1 sind gegeneinander geneigt, wobei sich deren Abstand in Richtung zur Einsetzöffnung 19 der Schutzleiteraufnahme 15 verjüngt. An ihrer den Stellschenkelabschnitten 18, 18.1 gegenüberliegenden Enden sind die Abschnitte 17, 17.1 über einen Klemmfederabschnitt 20 miteinander verbunden. Der Klemmfederabschnitt 20 umfasst ein Bogenstück 21. Dieses stellt das Scharnier dar, an dem die beiden Halteschenkel 16, 16.1 federelastisch gegeneinander verstellt werden können. Dieses gilt insbesondere in Bezug auf eine Aufweitbewegung beim Einsetzen eines Schutzleiters in die Schutzleiteraufnahme 15. Die Stellschenkelabschnitte 18, 18.1 dienen als Stellschrägen zum Öffnen der Einsetzöffnung 19, bis der Schutzleiter 6 durch die Einsetzöffnung 19 hindurchpasst und in die Schutzleiteraufnahme 15 einspringen kann. Ist der Schutzleiter 6 in der Schutzleiteraufnahme 15 aufgenommen, liegen die Abschnitte 17, 17.1 mit Vorspannung an der Mantelfläche des Schutzleiters 6 an. Dessen Durchmesser ist daher größer als der Abstand der Abschnitte 17, 17.1, wie in Figur 3 dargestellt, die die Federklammer 7 in unbelastetem Zustand zeigt.

Die Federklammer 7 verfügt aufgrund ihrer beiden Gabelfortsätze 14, 14.1 über zwei an ihren Montageschenkel 10 bzw. Montageschenkelteile angeformte Schutzleiteraufnahmen 15, 15.1. Der Montageschenkel 10 geht, wie vor allem in der Figur 3 erkennbar, in den jeweiligen Halteschenkel 16 über, und zwar unter Zwischenschaltung eines Verkröpfungsabschnittes 22, durch den der Halteschenkel 16 mit dem daran angeformten Bogenstück 21 in eine solche Raumlage gebracht ist, dass sein in Figur 3 nach links weisender Scheitel in Bezug auf eine in Figur 3 strichpunktiert gezeigte Vertikale 23 auf derselben Seite der Vertikale 23 angeordnet ist, wie die durch den Montageschenkel 10.1 gebildete Engstelle am Eingang 13 der Seitenholmaufnahme 9.

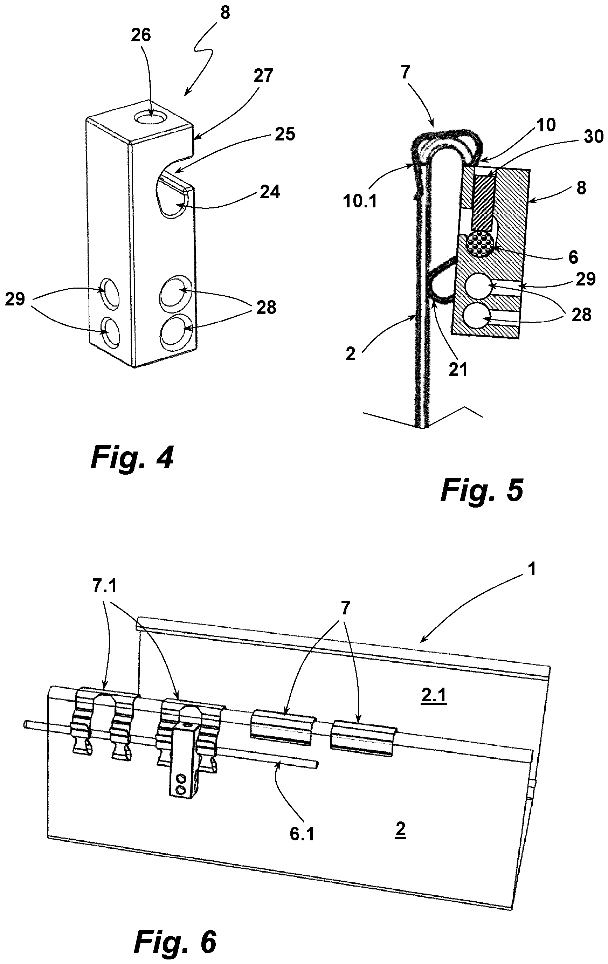

Die Anschlussklemme 8 ist in einer Alleindarstellung in Figur 4 gezeigt. Bei der Anschlussklemme 8 handelt es sich um ein quaderförmiges Messingteil, hergestellt aus einer eine hinreichende elektrische Leitfähigkeit aufweisenden Messinglegierung. Die Anschlussklemme 8 verfügt über eine Schutzleiteraufnahme 24. Diese ist seitlich offen. Dieses erleichtert ein Montieren der Anschlussklemme 8 an den Schutzleiter 6, wenn dieser an der Kabelrinne 1 montiert ist. Die Schutzleiteraufnahme 24 ist bezüglich der Öffnung 25 höhenversetzt. In der Schutzleiteraufnahme 24 ist der Schutzleiter 6 durch eine in Figur 4 nicht dargestellte Klemmschraube gehalten. Diese kämmt mit ihrem Gewinde eine Innengewindebohrung 26, die ein die Schutzleiteraufnahme 24 überdeckenden Dachabschnitt 27 der Anschlussklemme 8 durchgreift. Eine in die Innengewindebohrung 26 eingesetzte Klemmschraube, beispielsweise als Madenschraube ausgeführt, wirkt auf einen in die Schutzleiteraufnahme 24 eingesetzten Schutzleiter in Richtung der Höhe der Anschlussklemme 8, wodurch der Schutzleiter 6 an die unterseitige Wandung der Schutzleiteraufnahme 24 gedrückt wird. Die Anschlussklemme 8 des dargestellten Ausführungsbeispiels verfügt über zwei Anschlussbohrungen 28, in die die Schutzleiter eines an die Anschlussklemme 8 anzuschließenden Schutzleiters, typischerweise solche von Maschinen angeschlossen werden können. Fixiert werden die in eine solche Anschlussbohrung 28 eingesetzten Schutzleiter ebenfalls mittels Klemmschrauben, die das Gewinde einer Innengewindebohrung 29 kämmen und somit mit ihrem Fuße auf die in die Anschlussbohrungen 28 eingesetzten Schutzleiterabschnitte wirken, wodurch diese in den Anschlussbohrungen 28 mechanisch fixiert sind und die gewünscht elektrische Kontaktierung mit der Anschlussklemme 8 herbeigeführt ist.

Figur 5 zeigt in einer Schnittdarstellung die auf den durch das Auge 4 bereitgestellten oberen Abschluss des Seitenholms 2 aufgesetzte Federklammer 7. Aufgrund der Ausgestaltung der Federklammer 7, wie zu den Figuren 2 und 3 beschrieben, ist der Bogenabschnitt 21 des Halteschenkels 16 an der Innenseite des Seitenholms 2 unter Vorspannung stehend abgestützt. Gleichfalls wirken die Innenseiten der Montageschenkel 10, 10.1 gegen den Seitenholm 2 bzw. sein Auge 4, wobei der Montageschenkel 10 gegen die Außenseite 5 des Auges 4 wirkt. Zwischen die beiden Gabelfortsätze 14, 14.1 ist die Anschlussklemme 8 montiert. Die den Schutzleiter 6 fixierende die Innengewindebohrung 26 kämmende Klemmschraube ist in Figur 5 mit dem Bezugszeichen 30 kenntlich gemacht. Die Schnittdarstellung der Figur 5 verdeutlicht, dass die Anschlussklemme 8 mit ihrem Dachabschnitt 27 den unteren Abschluss des Auges 4 untergreift. Vorzugsweise ist die Anschlussklemme 8 so ausgeführt, dass durch die Klemmschraube 30 nicht nur der Schutzleiter 6 in der Schutzleiteraufnahme 24 verklemmt gehalten ist, sondern dass mit einer gewissen Vorspannung auch die Oberseite des das Auge 4 untergreifenden Dachabschnittes 27 gegen den unteren Abschluss des Auges 4 wirkt. Damit ist die elektrische Kontaktfläche zwischen der Anschlussklemme 8 und der Kabelrinne 1 vergrößert. Von besonderem Vorteil ist jedoch, dass durch den Untergriff des Auges 4 durch die Anschlussklemme 8 die Federklammer 7 an dem oberen Abschluss des Seitenholms 2 der Kabelrinne 1 verriegelt ist.

In einer in den Figuren nicht dargestellten Ausgestaltung können zur Erzielung einer solchen Verriegelung auch Anschlussklemmen eingesetzt werden, die nur aus dem oberen, die Anschlussaufnahme 24 umfassenden Teil bestehen. Diese dienen dann nicht zum Bereitstellen von Abzweigungen, wie dieses zu der Anschlussklemme 8 mit ihren Anschlussbohrungen 28 erläutert ist, sondern alleinig zum verriegelten Anschließen der Federklammern an die Kabelrinne 1.

Ein solcher Anschluss und auch das unter Vorspannung stehende Abstützen der Federklammer 7 mit ihrem Bogenabschnitt 21 an der Innenseite des Seitenholms 2, und zwar von der Montageaufnahme 9 in Richtung der Höhe beabstandet, stellt eine stabile Mehrpunktfixierung dar, so dass sich ein Einsatz derartiger Federklammern 7 zum Halten eines Schutzleiters 6 auch in vibrationsreichen Umgebungen eignet. Die zusätzliche Verriegelung mit einer Anschlussklemme 8, wie beschrieben, verbessert den Anschluss entsprechend.

Figur 6 zeigt eine perspektivische Ansicht auf die Außenseite der Kabelrinne 1, die zur Illustration ebenfalls an der Außenseite des Seitenholms 2 einen Schutzleiter 6.1 trägt. Der Schutzleiter 6.1 ist mit Federklammern 7.1 in analoger Weise an den oberen Abschluss des Seitenholms 2 angeschlossen, wie dieses zu dem Schutzleiter 6 mittels der Federklammern 7 beschrieben ist. Die Federklammern 7.1 unterscheiden sich von den Federklammern 7 nur dadurch, dass die Gabelfortsätze 14, 14.1 an den außenliegenden Montageschenkel 10.2 und nicht an den innenliegenden Montageschenkel 10.3 angeschlossen sind. Die stabile Abstützung ist auch bei dieser Federklammer 7.1 an der Außenseite des Seitenholms 2 gewährleistet.

Von besonderem Vorteil bei der beschriebenen Kabelrinne 1 ist, dass sich eine solche ohne jedwede, an eine Schutzleitermontage angepasste Besonderheiten eignet, um mit den beschriebenen Federklammern 7, 7.1 einen Schutzleiter daran zu montieren. Gleiches gilt für die Bereitstellung von Abzweigungen an dem Schutzleiter 6, 6.1, die mittels der Anschlussklemmen 8 bereitgestellt werden können. Daher erstreckt sich die Erfindung auch auf ein Schutzleiterset, umfassend eine Mehrzahl oder eine Vielzahl derartiger Federklammern 7, 7.1 und eine Mehrzahl oder Vielzahl der beschriebenen Anschlussklemmen 8.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung gemäß dem Schutzumfang der Ansprüche umzusetzen, ohne dass dieses im Rahmen dieser Ausführungen im Einzelnen näher dargelegt werden müsste.

### Bezugszeichenliste

- 1: Kabelrinne
- 2, 2.1: Seitenholm
- 3: Boden
- 4, 4.1: Auge
- 5, 5.1: Außenseite
- 6, 6.1: Schutzleiter
- 7, 7.1: Federklammer
- 8: Anschlussklemme
- 9: Seitenholmaufnahme
- 10, 10.1, 10.2, 10.3: Montageschenkel
- 11: Steg
- 12, 12.1: Bogenstück
- 13: Eingang
- 14, 14.1: Gabelfortsatz
- 15, 15.1: Schutzleiteraufnahme
- 16, 16.1: Halteschenkel
- 17, 17.1: Abschnitt
- 18, 18.1: Stellschenkelabschnitt
- 19: Einsetzöffnung
- 20: Klemmfederabschnitt
- 21: Bogenstück
- 22: Verriegelungsabschnitt
- 23: Vertikale
- 24: Schutzleiteraufnahme
- 25: Öffnung
- 26: Innengewindebohrung
- 27: Dachabschnitt
- 28: Anschlussbohrung
- 29: Innengewindebohrung
- 30: Klemmschraube

## Patentansprüche

1. Kabelrinne mit zwei mit Abstand zueinander angeordneten Seitenholmen (2, 2.1), mit zumindest einem Schutzleiterhalter (7, 7.1) und mit einem Schutzleiter (6, 6.1), wobei der zumindest eine Schutzleiterhalter als Federklammer (7, 7.1) mit jeweils einer durch zwei Montageschenkel (10, 10.1; 10.2, 10.3) eingefassten Aufnahme (9) zum Anschließen der Federklammer (7, 7.1) an den oberen Abschluss eines Seitenholms (2, 2.1) und mit einer durch zwei Halteschenkel (16, 16.1) eingefassten, hinterschnittenen Schutzleiteraufnahme (15, 15.1) ausgeführt ist, wobei die Montageschenkel (10, 10.1; 10.2, 10.3) bei auf den oberen Abschluss des Seitenholms (2, 2.1) montierter Federklammer (7, 7.1) unter Vorspannung stehend an diesem anliegen und der Abstand der Halteschenkel (16, 16.1) voneinander in ihrem die Schutzleiteraufnahme (15, 15.1) einfassenden Abschnitt geringer ist als der Durchmesser des darin eingebrachten Schutzleiters (6, 6.1), wobei die zumindest eine Federklammer (7, 7.1) unter Ausbildung von zwei in Längserstreckung der Kabelrinne (1) voneinander beabstandeten Schutzleiteraufnahmen (15, 15.1) gegabelt ausgeführt ist und wobei in dem durch die Gabelung der Federklammer (7, 7.1) bereitgestellten Zwischenraum eine an den Schutzleiter (6, 6.1) angeschlossene Anschlussklemme (8) angeordnet ist.

2. Kabelrinne nach Anspruch 1, **dadurch gekennzeichnet, dass** an dem die zumindest eine Federklammer (7, 7.1) tragenden Seitenholm (2, 2.1) als oberer Abschluss ein Auge (4, 4.1) geformt ist und der an der Außenseite (5, 5.1) des Auges (4, 4.1) anliegende Montageschenkel (10, 10.3) gegenüber der Ebene des Seitenholms (2, 2.1) stärker geneigt ist als der andere Montageschenkel (10.1, 10.2) und dadurch das Auge zumindest etwas untergreift.

3. Kabelrinne nach Anspruch 1 oder 2, **dadurch gekennzeichnet, dass** die an einem Seitenholm (2, 2.1) der Kabelrinne (1) montierte Federklammer (7, 7.1) mit einem seiner Halteschenkel (16) unter Vorspannung stehend an dem Seitenholm (2) mit Abstand zu seinem oberen Abschluss abgestützt ist.

4. Kabelrinne nach einem der Ansprüche 1 bis 3, **dadurch gekennzeichnet, dass** an dem Schutzleiter (6, 6.1) zumindest eine Anschlussklemme (8) montiert ist.

5. Kabelrinne nach einem der Ansprüche 1 bis 4, **dadurch gekennzeichnet, dass** die Anschlussklemme (8) eine in Richtung zum Seitenholm (2) hin offene Schutzleiteraufnahme (24) sowie ein auf den darin eingeführten Schutzleiter (6, 6.1) wirkendes Klemmmittel (30) aufweist.

6. Kabelrinnen nach Anspruch 5, **dadurch gekennzeichnet, dass** das Klemmmittel eine Klemmschraube (30), insbesondere eine Madenschraube, ist.

7. Kabelrinne nach Anspruch 6, **dadurch gekennzeichnet, dass** die Klemmschraube (30) in Richtung der Höhe des Seitenholms (2, 2.1) bzw. der Anschlussklemme (8) wirkt.

8. Kabelrinne nach Anspruch 7, **dadurch gekennzeichnet, dass** der Seitenholm (2, 2.1) als oberen Abschluss ein Auge (4, 4.1) aufweist, dass sich der Schutzleiter (6, 6.1) an derjenigen Seite des Seitenholms (2, 2.1), in welche Richtung das Auge (4, 4.1) geformt ist, befindet und dass die Anschlussklemme (8) das Auge (4, 4.1) des Seitenholms (2, 2.1) untergreift.

9. Kabelrinne nach einem der Ansprüche 1 bis 8, **dadurch gekennzeichnet, dass** an einen der beiden Montageschenkel (10, 10.2) einer der beiden Halteschenkel (16) der Schutzleiteraufnahme (15, 15.1) angeformt ist.

10. Kabelrinne nach einem der Ansprüche 1 bis 9, **dadurch gekennzeichnet, dass** die Halteschenkel (16, 16.1) der Schutzleiteraufnahme (15, 15.1) jeweils einen Stellschenkelabschnitt (18, 18.1) aufweisen, wobei sich der Abstand der beiden Stellschenkelabschnitte (18, 18.1) in Richtung zum Eingang (19) der hinterschnittenen Schutzleiteraufnahme (15, 15.1) reduziert.

11. Kabelrinne nach einem der Ansprüche 1 bis 10, **dadurch gekennzeichnet, dass** die Halteschenkel (16, 16.1) der Schutzleiteraufnahme (15, 15.1) über einen Klemmfederabschnitt (20) miteinander verbunden sind.

12. Kabelrinne nach einem der Ansprüche 1 bis 11, **dadurch gekennzeichnet, dass** die Seitenholmaufnahme (9) durch gegeneinander geneigt angeordnete Montageschenkel (10. 10.1; 10.2, 10.3) hinterschnitten ist.

13. Kabelrinne nach einem der Ansprüche 1 bis 12, **dadurch gekennzeichnet, dass** die beiden die Seitenholmaufnahme (9) einfassenden Montageschenkel (10, 10.1; 10.2, 10.3) durch einen bei an einem Seitenholm (2, 2.1) montierter Federklammer (7, 7.1) an dem oberen Abschluss des Seitenholms anliegenden Steg (11) verbunden sind.

## Claims

1. Cable tray having two spaced-apart side bars (2, 2.1), with at least one earth wire holder (7, 7.1) and with an earth wire (6, 6.1), wherein the at least one earth wire holder is configured as a spring clamp (7, 7.1) with in each case a receptacle (9) enclosed by two mounting arms (10, 10.1; 10.2, 10.3) for connecting the spring clamp (7, 7.1) to the upper edge of a side bar (2, 2.1) and with an undercut earth wire receptacle (15, 15.1) enclosed by two holding arms (16, 16.1), wherein, when the spring clamp (7, 7.1) is mounted on the upper edge of the side bar (2, 2.1), the mounting arms (10, 10.1; 10.2, 10.3) bear against the side bar under prestress, and the spacing between the holding arms (16, 16.1) in the section enclosing the earth wire receptacle (15, 15.1) is smaller than the diameter of the earth wire (6, 6.1) introduced therein, wherein, with the formation of two earth wire receptacles (15, 15.1), spaced apart from one another in the longitudinal extension of the cable tray (1), the at least one spring clamp (7, 7.1) is configured as forked, and wherein a connection clamp (8) connected to the earth wire (6, 6.1) is arranged in the intermediate space provided by the forking of the spring clamp (7, 7.1).

2. Cable tray according to claim 1, **characterised in that** an eye (4, 4.1) is formed on the side bar (2, 2.1) carrying the at least one spring clamp (7, 7.1) as an upper edge, and the mounting arm (10, 10.3) in contact with the outside (5, 5.1) of the eye (4, 4.1) is inclined more steeply in relation to the plane of the side bar (2, 2.1) than the other mounting arm (10.1, 10.2), and therefore at least somewhat undercuts the eye.

3. Cable tray according to claim 1 or 2, **characterised in that** the spring clamp (7, 7.1) mounted on a side bar (2, 2.1) of the cable tray (1) is supported with one of its holding arms (16) under prestress standing on the side bar (2) at a distance from its upper edge.

4. Cable tray according to any one of claims 1 to 3, **characterised in that** at least one connection clamp (8) is mounted on the earth wire (6, 6.1).

5. Cable tray according to any one of claims 1 to 4, **characterised in that** the connection clamp (8) has an earth wire receptacle (24) which is open in the direction towards the side bar (2), as well as a clamping means (30) which takes effect on the earth wire (6, 6.1) introduced therein.

6. Cable tray according to claim 5, **characterised in that** the clamping means is a clamping screw (30), in particular a Maden screw.

7. Cable tray according to claim 6, **characterised in that** the clamping screw (30) takes effect in the direction of the height of the side bar (2, 2.1) or of the connection clamp (8) respectively.

8. Cable tray according to claim 7, **characterised in that** the side bar (2, 2.1) has its upper edge an eye (4, 4.1), that the earth wire (6, 6.1) is located on that side of the side bar (2, 2.1) in the direction of which the eye (4, 4.1) is formed, and that the connection clamp (8) undercuts the eye (4, 4.1) of the side bar (2, 2.1).

9. Cable tray according to any one of claims 1 to 8, **characterised in that** one of the two holding arms (16) of the earth wire receptacle (15, 15.1) is formed at one of the two mounting arms (10, 10.2).

10. Cable tray according to any one of claims 1 to 9, **characterised in that** the holding arms (16, 16.1) of the earth wire receptacle (15, 15.1) comprise in each case a placement arm section (18, 18.1), wherein the distance between the two placement arm sections (18, 18.1) reduces in the direction towards the entry point (19) of the undercut earth wire receptacle (15, 15.1).

11. Cable tray according to any one of claims 1 to 10, **characterised in that** the holding arms (16, 16.1) of the earth wire receptacle (15, 15.1) are connected to one another by means of a clamping spring section (20).

12. Cable tray according to any one of claims 1 to 11, **characterised in that** the side bar receptacle (9) is undercut by mounting arms (10. 10.1; 10.2, 10.3) which are arranged inclined against one another.

13. Cable tray according to any one of claims 1 to 12, **characterised in that** the two mounting arms (10, 10.1; 10.2, 10.3) enclosing the side arm receptacle (9) are connected by a web (11) in contact with the upper edge of the side bar, with a spring clamp (7, 7.1) mounted at a side bar (2, 2.1).

## Revendications

1. Chemin de câbles avec deux montants latéraux (2, 2.1) disposés à distance l'un de l'autre, comportant au moins un porte-conducteur de protection (7, 7.1) et un conducteur de protection (6, 6.1), l'au moins un porte-conducteur de protection (7, 7.1) étant réalisé en tant que clip à ressort (7, 7.1), avec respectivement un logement (9) entouré de deux pattes de montage (10, 10.1 ; 10.2, 10.3) destinées à fixer le clip à ressort (7, 7.1) sur la terminaison supérieure d'un montant latéral (2, 2.1) et avec un logement (15, 15.1) de conducteur de protection contre-découpé, entouré par deux pattes de maintien (16, 16.1), les pattes de montage (10, 10.1 ; 10.2, 10.3) étant, lorsque les clips à ressort (7, 7.1) sont montés sur la terminaison supérieure du montant latéral (2, 2.1), en précontrainte, en appui sur celle-ci, et l'écartement entre les pattes de maintien (16, 16.1) dans leur tronçon qui entoure le logement (15, 15.1) de conducteur de protection étant inférieur au diamètre du conducteur de protection (6, 6.1) qui y est mis en place, l'au moins un clip à ressort (7, 7.1) étant réalisé en fourche en formant deux logements (15, 15.1) de conducteur de protection écartés l'un de l'autre dans le sens longitudinal du chemin de câbles (1), et une borne de raccordement (8), raccordée au conducteur de protection (6, 6.1), étant disposée dans l'intervalle mis à disposition par la fourche du clip à ressort (7, 7.1)

2. Chemin de câbles selon la revendication 1, **caractérisé en ce que** sur le montant latéral (2, 2.1) supportant l'au moins un clip à ressort (7, 7.1) est formé un oeil (4, 4.1) faisant office de terminaison supérieure et que la patte de montage (10, 10.3) en appui contre la face extérieure (5, 5.1) de l'oeil (4, 4.1) est plus fortement inclinée par rapport au plan du montant latéral (2, 2.1) que l'autre patte de montage (10.1, 10.2) et qu'elle saisit de ce fait l'oeil au moins quelque peu par le dessous.

3. Chemin de câbles selon la revendication 1 ou 2, **caractérisé en ce que** le clip à ressort (7, 7.1) monté sur un montant latéral (2, 2.1) du chemin de câbles (1) est en appui sous précontrainte par l'une de ses pattes de maintien (16) sur le montant latéral (2), à distance de sa terminaison supérieure.

4. Chemin de câbles selon l'une des revendications 1 à 3, **caractérisé en ce qu'**au moins une borne de raccordement (8) est montée sur le conducteur de protection (6, 6.1).

5. Chemin de câbles selon l'une des revendications 1 à 4, **caractérisé en ce que** la borne de raccordement (8) présente un logement (24) de conducteur de protection ouverte vers le montant latéral (2) ainsi qu'un moyen de serrage (30) agissant sur le conducteur de protection (6, 6.1) qui y est engagé.

6. Chemin de câbles selon la revendication 5, **caractérisé en ce que** le moyen de serrage est une vis de serrage (30), notamment une vis sans tête.

7. Chemin de câbles selon la revendication 6, **caractérisé en ce que** la vis de serrage (30) agit en direction de la hauteur du montant latéral (2, 2.1), en l'occurrence de la borne de raccordement (8).

8. Chemin de câbles selon la revendication 7, **caractérisé en ce que** le montant latéral (2, 2.1) présente en guise de terminaison supérieure un oeil (4, 4.1), **en ce que** le conducteur de protection (6, 6.1) se trouve sur le côté du montant latéral (2, 2.1) vers lequel l'oeil (4, 4.1) est formé, et **en ce que** la borne de raccordement (8) saisit par le dessous l'oeil (4, 4.1) du montant latéral (2, 2.1).

9. Chemin de câbles selon l'une des revendications 1 à 8, **caractérisé en ce que** sur l'une des deux pattes de montage (10, 10.2) est formée l'une des deux pattes de maintien (16) du logement (15, 15.1) de conducteur de protection.

10. Chemin de câbles selon l'une des revendications 1 à 9, **caractérisé en ce que** les pattes de maintien (16, 16.1) du logement (15, 15.1) de conducteur de protection présentent respectivement un tronçon de patte d'ajustage (18, 18.1), l'intervalle entre les deux tronçons de patte d'ajustage (18, 18.1) se réduisant en direction de l'entrée (19) du logement (15, 15.1) de conducteur de protection contre-découpé.

11. Chemin de câbles selon l'une des revendications 1 à 10, **caractérisé en ce que** les pattes de maintien (16, 16.1) du logement (15, 15.1) de conducteur de protection sont raccordées l'une à l'autre par un tronçon (20) de clip à ressort.

12. Chemin de câbles selon l'une des revendications 1 à 11, **caractérisé en ce que** le logement (9) de montant latéral est contre-découpé grâce à des pattes de montage (10, 10.1 ; 10.2, 10.3) disposées avec une inclinaison opposée l'une à l'autre.

13. Chemin de câbles selon l'une des revendications 1 à 12, **caractérisé en ce que** les deux pattes de montage (10, 10.1 ; 10.2, 10.3) entourant le logement (9) de montant latéral sont reliées par une traverse (11) en appui sur la terminaison supérieure du montant latéral lorsque le clip à ressort (7, 7.1) est monté sur un montant latéral (2, 2.1).
